# EUROPEAN PATENT APPLICATION

(11) **EP 4 769 127 A1**
(43) Date of publication of application: **01.07.2026**
(21) Application number: 25150157.3
(22) Date of filing: 03.01.2025
(51) Int. Cl.: G06F 9/30, G06F 9/38

(54) **FORK, JOIN AND SHADER EXECUTION IN PARALLEL**

(30) Priority: 26.12.2024 US 202419001581
(71) Applicant: MediaTek Inc., Hsinchu City, 30078 (TW)
(72) Inventor: LUO, Chengping, San Jose, 95134 (US); TSAO, You-Ming, 30078 Hsinchu City (TW); CHEN, Bozhan, San Jose, 95134 (US); BAI, Yu, San Jose, 95134 (US); SONG, Litong, San Jose, 95134 (US); MAO, Jian, San Jose, 95134 (US)
(74) Representative: Hoefer & Partner Patentanwälte mbB

(57) **Abstract**

An execution in parallel method for a graphic processing unit includes providing a plurality of threads (400), enabling a first program counter, and the first program counter running a first program on the plurality of threads (400). When receiving a fork instruction, enable a second program counter, and if a first active mask of the fork instruction is set as a pass mask, and a second active mask is set as a fail mask, the first program counter activates a first set of threads (410) corresponding to the pass mask. When the first set of threads is blocked, the second program counter activates a second set of threads (420) corresponding to the fail mask. When the second set of threads is blocked, the first program counter activates the first set of threads. When receiving a join instruction, disable the second program counter, and the first program counter activates the plurality of threads (450).

## Description

### Background

Graphic processing unit (GPU) shader core is a typical single instruction multiple data (SIMD) architecture. The GPU shader core comprises an arithmetic logic unit (ALU) array and other process units, and each ALU in the array has a small amount of dedicate memory or registers where the data resides.

Workloads are organized as blocks of threads, and each thread from the same block is mapped to each ALU and runs through the whole shader in lock-step mode.

When there is divergent in a shader instruction list, such as "if" and "else", the shader instruction list is split to multiple sections, and in each section, there are only some active threads.

Since the whole blocks are executing instructions in the shader instruction list in lock-step mode, when the execution is blocked in one section, the whole block execution will be blocked.

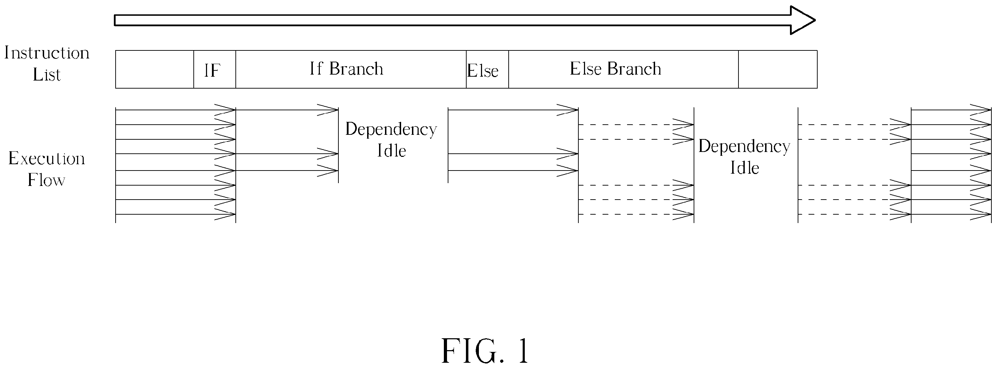

FIG.1 shows a conventional execution flow under an instruction list of "if" and "else" for a graphic processing unit (GPU) according to an embodiment of the prior art. The total number of threads is 8 in FIG.1 but not limited to 8 in the present invention. A first program counter is enabled to activate 8 threads in FIG.1. 3 threads of the 8 threads shown as solid lines are for "if" section, and 5 threads of the 8 threads shown as dashed lines are for "else" section. When the execution flow for "if" section needs to wait for the results of previous execution and only one program counter is used in the "if" section, there would be a dependency idle to wait for the results of previous execution. When the execution flow for "else" section needs to wait for the results of previous execution and only one program counter is used in the "else" section, there would also be a dependency idle to wait for the results of previous execution.

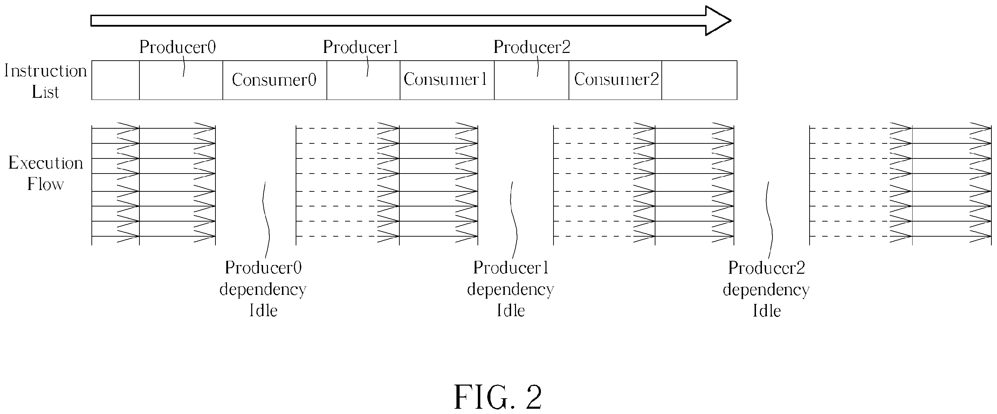

FIG.2 shows a conventional execution flow under an instruction list of "producer" and "consumer" for a graphic processing unit (GPU) according to an embodiment of the prior art. The total number of threads is 8 in FIG.2 but not limited to 8 in the present invention. The first program counter is enabled to activate 8 threads in FIG.2. 8 threads shown as solid lines are for "producer" sections, and 8 threads shown as dashed lines are for "consumer" sections. If the execution flow for "consumer" sections needs to wait for the results of previous "producer" executions, there would be three dependency idles (e.g. producer0 dependency idle, producer1 dependency idle and producer2 dependency idle) when using only one program counter in the "consumer" sections.

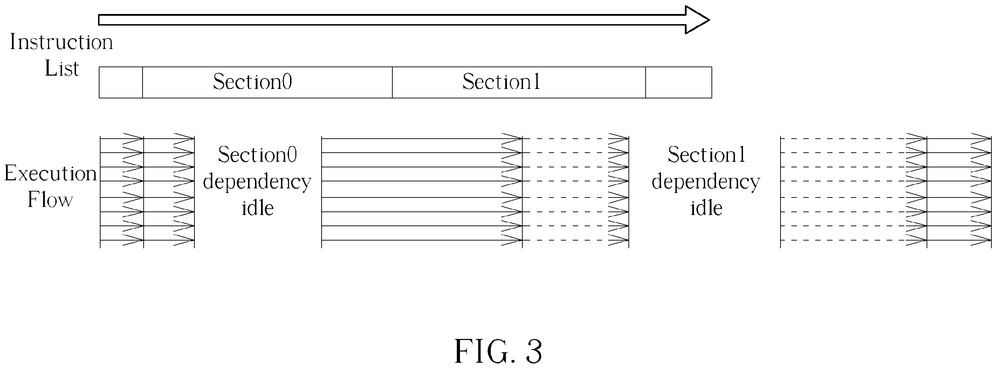

FIG.3 shows a conventional execution flow under an instruction list of "section0" and "section1" for a graphic processing unit (GPU) according to an embodiment of the prior art. The total number of threads is 8 in FIG.3 but not limited to 8 in the present invention. The first program counter is enabled to activate 8 threads shown as solid lines for "section0" and the 8 threads shown as dashed lines for "section1". When the execution flow for "section0" needs to wait for the results of previous execution and only one program counter is used in "section0", there would be a dependency idle. When the execution flow for "section1" needs to wait for the results of previous execution and only one program counter is used in "section1", there would also be a dependency idle.

### Summary

Execution in parallel methods according to the invention are defined in the independent claims. The dependent claims define preferred embodiments thereof. An execution in parallel method for a graphic processing unit includes providing a plurality of threads, enabling a first program counter, and the first program counter running a first program on the plurality of threads. When receiving a fork instruction, enable a second program counter, and if a first active mask of the fork instruction is set as a pass mask, and a second active mask of the fork instruction is set as a fail mask, the first program counter activates a first set of threads of the plurality of threads corresponding to the pass mask. When the first set of threads is blocked, the second program counter activates a second set of threads of the plurality of threads corresponding to the fail mask. When the second set of threads is blocked, the first program counter activates the first set of threads. When receiving a join instruction, disable the second program counter, and the first program counter activates the plurality of threads.

An execution in parallel method for a graphic processing unit includes providing a plurality of threads, enabling a first program counter, and the first program counter running a first program on the plurality of threads. When receiving a fork instruction, enable a second program counter, and if a first active mask of the fork instruction is set as a pass mask, and a second active mask of the fork instruction is also set as the pass mask, the first program counter activates a set of threads of the plurality of threads corresponding to the pass mask. When the first program counter is blocked, the second program counter activates the set of threads. When the second program counter is blocked, the first program counter activates the set of threads. When receiving a join instruction, disable the second program counter, and the first program counter activates the plurality of threads.

These and other objectives of the present invention will no doubt become obvious to those of ordinary skill in the art after reading the following detailed description of the preferred embodiment that is illustrated in the various figures and drawings.

### Brief Description of the Drawings

FIG.1 shows a conventional execution flow under an instruction list of "if" and "else" for a graphic processing unit (GPU) according to an embodiment of the prior art.
FIG.2 shows a conventional execution flow under an instruction list of "producer" and "consumer" for a graphic processing unit (GPU) according to an embodiment of the prior art.
FIG.3 shows a conventional execution flow under an instruction list of "section0" and "section1" for a graphic processing unit (GPU) according to an embodiment of the prior art.
FIG.4 shows an innovative execution flow under an instruction list of "fork" and "join" for a graphic processing unit (GPU) according to an embodiment of the present invention.
FIG.5 shows an innovative execution flow under an instruction list of "fork" and "join" for a graphic processing unit (GPU) according to another embodiment of the present invention.
FIG.6 shows an innovative execution flow under an instruction list of "fork" and "join" for a graphic processing unit (GPU) according to another embodiment of the present invention.

### Detailed Description

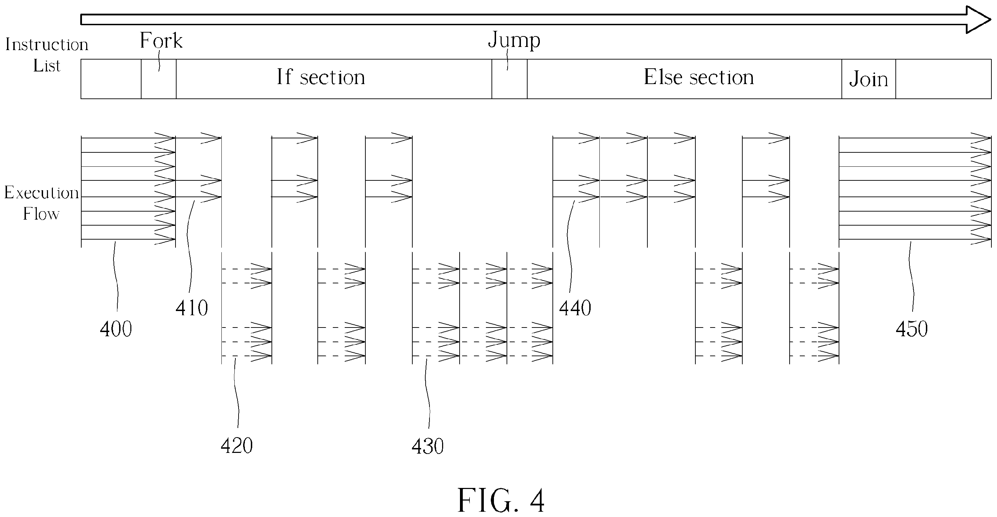

FIG.4 shows an innovative execution flow under an instruction list of "fork" and "join" for a graphic processing unit (GPU) according to an embodiment of the present invention. The total number of threads is 8 in FIG.4 but not limited to 8 in the present invention. In this embodiment, "if" and "else" sections in FIG.1 are compiled into "fork" and "join" in FIG.4. The "fork" instruction contains a mode bit, a plurality of others bits, a source byte, and an offset byte. The mode bit is configured to determine a duplicate mode or a branch mode. The source byte includes a flow control test source or a flow control condition. The offset byte is configured to define a program counter offset for initializing the second program counter. At first, the first program counter activates a plurality of threads (e.g. 8 threads 400 in FIG.4). Then, the first program counter activates a first set of threads (e.g. the 3 solid lines 410 in FIG.4) of the plurality of threads. When the execution of the first program counter is blocked, the second program counter activates a second set of threads (e.g. the 5 dashed lines 420 in FIG.4) of the plurality of threads in branch mode. When the second program counter is blocked, the first program counter activates the first set of threads of the plurality of threads. When the second program counter is not blocked, the second program counter continues executing the second set of threads 430 of the plurality of threads until the second program counter is blocked. When the first program counter is not blocked, the first program counter continues executing the first set of threads 440 of the plurality of threads until the first program counter is blocked. Thus, the first program counter and the second program counter run in a round-robin mode as shown in FIG.4. When the execution flow executes a "join" instruction, the second program counter is disabled, and the first program counter activates the plurality of threads (e.g. 8 threads 450 in FIG.4).

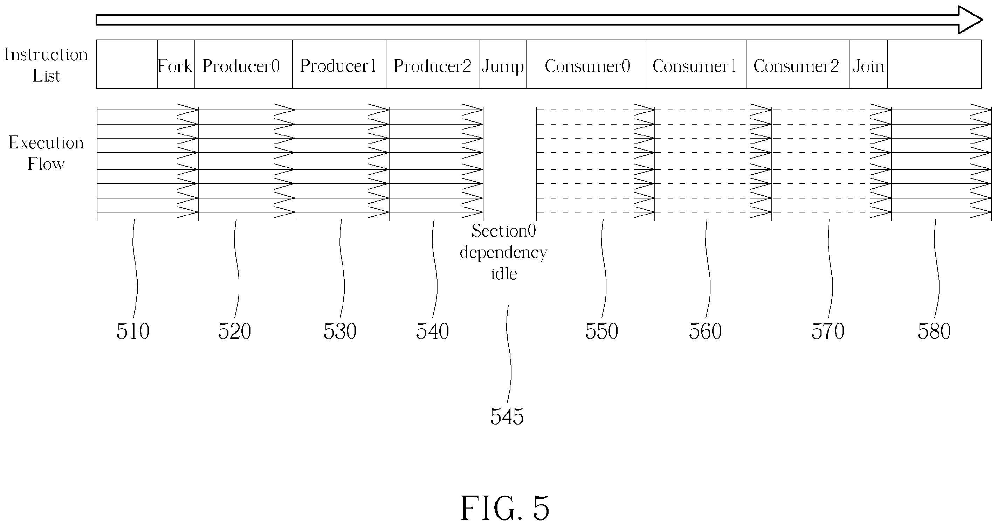

FIG.5 shows an innovative execution flow under an instruction list of "fork" and "join" for a graphic processing unit (GPU) according to another embodiment of the present invention. The total number of threads is 8 in FIG.5 but not limited to 8 in the present invention. In this embodiment, "fork" and "join" instructions in FIG.5 are compiled to solve the problem in FIG.2. At first, the first program counter activates a plurality of threads (e.g. 8 threads 510 in FIG.5). Secondly, the first program counter executes producer0 520. Since an instruction of consumer0 550 needs to wait for the result of executing producer0 520, the first program counter executes producer1 530 instead of the second program counter executing consumer0 550 while consumer0 550 waits for the result of producer0 520. After the first program counter executes producer1 530, an instruction of consumer1 560 needs to wait for the result of executing producer1 530, so the first program counter executing producer2 540 instead of the second program counter executing consumer1 560 while waiting for the result of producer1 530. After the first program counter executes producer2 540, an instruction of consumer2 570 needs to wait for the result of executing producer2 540. In this way, the producer0 520, producer1 530 and producer2 540 are executed first, and after a small producer0 dependency idle 545, the consumer0 550, consumer1 560 and consumer2 570 are executed sequentially. The producer0 dependency idle is covered by producer1 530, producer2 540, and the small producer0 dependency idle 545. The producer1 dependency idle is covered by producer2 540, the small producer0 dependency idle 545, and consumer0 550, and the producer2 dependency idle is covered by the small producer0 dependency idle 545, consumer0 550, and consumer1 560. When the execution flow runs to a "join" instruction, the second program counter is disabled, and the first program counter activates the plurality of threads 580. Therefore, the execution flow is performed in an efficient manner. If producer1 530 and producer2 540 are sufficiently long, then the small producer0 dependency idle 545 may be omitted because the producer0 dependency idle can be completely covered by producer1 530, and producer2 540. Further if the first program counter executes another producer after producer2 540, then the small producer0 dependency idle 545 may be omitted because the producer0 dependency idle can be completely covered by producer1 530, producer2 540, and another producer.

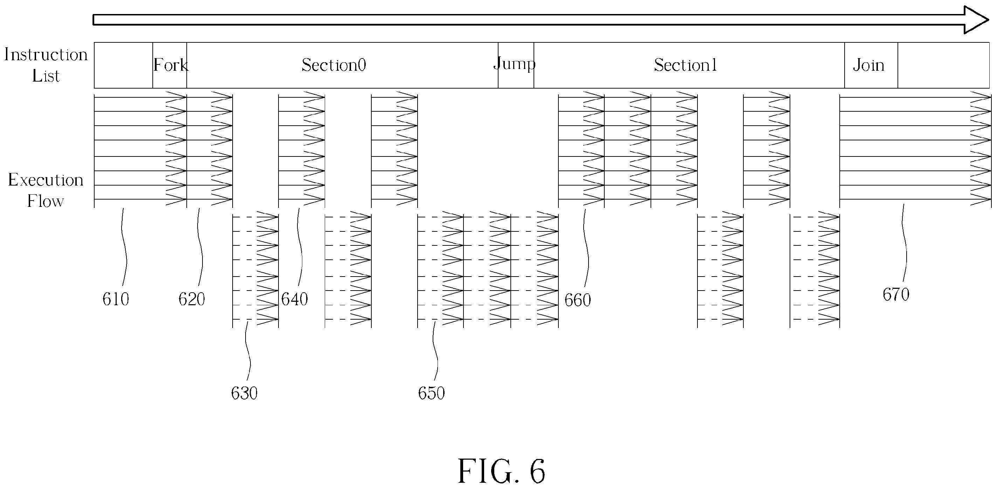

FIG.6 shows an innovative execution flow under an instruction list of "fork" and "join" for a graphic processing unit (GPU) according to another embodiment of the present invention. The total number of threads is 8 in FIG.6 but not limited to 8 in the present invention. In this embodiment, "fork" and "join" instructions in FIG.6 are compiled to solve the problem in FIG.3. At first, the first program counter activates the plurality of threads (e.g. the 8 threads 610 in FIG.6). Then, the first program counter activates a set of threads (e.g. the 8 solid lines 620 in FIG.6) of the plurality of threads. The number of threads in the set of threads may be equal or less than the number of threads 610. When the execution of the first program counter is blocked, the second program counter activates the set of threads (e.g. the 8 dashed lines 630 in FIG.6) of the plurality of threads in duplicate mode. When the execution of the second program counter is blocked, the first program counter activates the set of threads (e.g. the 8 dashed lines 640 in FIG.6) of the plurality of threads in duplicate mode. When the second program counter is not blocked, the second program counter continues executing the second set of threads 650 of the plurality of threads until the second program counter is blocked. When the first program counter is not blocked, the first program counter continues executing the first set of threads 660 of the plurality of threads until the first program counter is blocked. Thus, the first program counter and the second program counter run in a round-robin mode as shown in FIG.6. In ideal case, the dependency idle in section0 (threads represented by solid lines) is covered by the execution flow in section1 (threads represented by dashed lines), and the dependency idle in section1 is covered by the execution flow in section0. When a "join" instruction is executed, the second program counter is disabled, and the first program counter activates the plurality of threads 670.

In conclusion, the "fork" and "join" can provide an execution flow runs in parallel and efficient way to reduce and even avoid dependency idles.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An execution in parallel method for a graphic processing unit, comprising:
providing a plurality of threads (400);
enabling a first program counter;
the first program counter running a first program on the plurality of threads (400);
when receiving a fork instruction, enabling a second program counter, and if a first active mask of the fork instruction is set as a pass mask, and a second active mask of the fork instruction is set as a fail mask, the first program counter activating a first set of threads (410) of the plurality of threads corresponding to the pass mask;
when the first set of threads (410) is blocked, the second program counter activating a second set of threads (420) of the plurality of threads (400) corresponding to the fail mask;
when the second set of threads is blocked, the first program counter activating the first set of threads; and
when receiving a join instruction, disabling the second program counter, and the first program counter activating the plurality of threads (450).

2. The execution in parallel method of claim 1, wherein the fork instruction is operated in a branch mode.

3. The execution in parallel method of claim 1 or 2, wherein the graphic processing unit is applied to graphic shader objects, compute kernels and artificial intelligent, in the following also referred to as AI, kernels.

4. The execution in parallel method of any one of claims 1 to 3, wherein the fork instruction comprises:
a mode bit configured to determine a duplicate mode or a branch mode;
a source byte including a flow control test source or a flow control condition; and
an offset byte configured to define a program counter offset for initializing the second program counter.

5. The execution in parallel method of claim 4, wherein the fork instruction is operated in a branch mode, the mode bit is 1.

6. The execution in parallel method of any one of claims 1 to 5, wherein the first program counter has a higher priority than the second program counter.

7. An execution in parallel method for a graphic processing unit, comprising:
providing a plurality of threads (610);
enabling a first program counter;
the first program counter running a first program on the plurality of threads (610);
when receiving a fork instruction, enabling a second program counter, and if a first active mask of the fork instruction is set as a pass mask, and a second active mask of the fork instruction is also set as the pass mask, the first program counter activating a set of threads (620) of the plurality of threads (610) corresponding to the pass mask;
when the first program counter is blocked, the second program counter activating the set of threads (630);
when the second program counter is blocked, the first program counter activating the set of threads (640); and
when receiving a join instruction, disabling the second program counter, and the first program counter activating the plurality of threads (670).

8. The execution in parallel method of claim 7, wherein the fork instruction is operated in a duplicate mode.

9. The execution in parallel method of claim 7 or 8, wherein the graphic processing unit is applied to graphic shader objects, compute kernels and artificial intelligent, in the following also referred to as AI, kernels.

10. The execution in parallel method of any one of claims 7 to 9, wherein the fork instruction comprises:
a mode bit configured to determine a duplicate mode or a branch mode;
a source byte including a flow control test source or a flow control condition; and
an offset byte configured to define a program counter offset for initializing the second program counter.

11. The execution in parallel method of claim 10, wherein the fork instruction is operated in a duplicate mode, the mode bit is 0.

12. The execution in parallel method of any one of claims 7 to 11, wherein the first program counter has a higher priority than the second program counter.
